# EUROPÄISCHE PATENTSCHRIFT

(11) **EP 1 809 776 B1**
(45) Veröffentlichungstag und Bekanntmachung des Hinweises auf die Patenterteilung: **01.02.2012**
(21) Anmeldenummer: 05810117.1
(22) Anmeldetag: 26.10.2005
(51) Int. Cl.: C21D 1/673, B21D 53/88, B62D 25/04

(54) **VERFAHREN ZUR HERSTELLUNG VON BLECHBAUTEILEN SOWIE KAROSSERIEBAUTEIL**
METHOD FOR PRODUCTION OF SHEET COMPONENTS AND CHASSIS COMPONENTS
PROCEDE DE FABRICATION D'ELEMENTS EN TOLE ET ELEMENT DE CARROSSERIE

(30) Priorität: 12.11.2004 DE 102004054795
(43) Veröffentlichungstag der Anmeldung: 25.07.2007
(73) Patentinhaber: ThyssenKrupp Sofedit S.A.S., 78056 Saint-Quentin-en-Yvelines (FR)
(72) Erfinder: LETY, Jean-Jaques, F-76360 Bouville (FR); PINEAU, Eric, F-95250 Beauchamp (FR); NICOLAS, Yann, F-72320 Saint Maixent (FR)
(74) Vertreter: Cohausz & Florack
(86) Internationale Anmeldenummer: PCT/DE2005/001915
(87) Internationale Veröffentlichungsnummer: WO 2006/050688

(56) Entgegenhaltungen:
- WO-A-98/56641
- DE-A1- 10 049 660
- DE-B3- 10 254 695
- DE-B3- 10 305 725
- GB-A- 1 490 535
- PATENT ABSTRACTS OF JAPAN Bd. 2003, Nr. 12, 5. Dezember 2003 (2003-12-05) -& JP 2003 231915 A (JFE STEEL KK), 19. August 2003 (2003-08-19)

## Beschreibung

Die Erfindung betrifft ein Verfahren zur Herstellung von Fahrzeugbauteilen, die durch Warmumformen eines Materialverbundes, der aus mindestens zwei durch Schweißen und/oder Löten fest miteinander verbundenen Blechen gebildet ist, erzeugt werden, sowie ein entsprechendes Karosseriebauteil.

Die DE-A 100 49 660 offenbart ein Verfahren zum Herstellen lokal verstärkter Ziehteile, bei dem das Basisblech des Strukturteils im Flachzustand mit dem Verstärkungsblech lagedefiniert verbunden und dieses gepatchte Verbundblech anschließend gemeinsam umgeformt wird. Um das Herstellungsverfahren hinsichtlich Verfahrenserzeugnis und -ergebnis zu verbessern sowie bezüglich der verfahrensausübenden Mittel zu entlasten, wird das gepatchte Verbundblech vor dem Umformen mindestens auf etwa 800 bis 850°C erwärmt, rasch eingelegt, im Warmzustand zügig umgeformt und anschließend bei mechanischer Fixierung des Umformzustandes durch Kontaktierung mit dem von innen her zwangsgekühlten Umformwerkzeug definiert abgekühlt. Insbesondere der in soweit maßgebende Temperaturbereich von 800 bis 500°C wird mit einer definierten Temperaturrampe durchfahren. Der Schritt des Verbindens von Verstärkungsblech und Basisblech kann ohne weiteres in den Umformprozess integriert werden, indem die Teile miteinander hart verlötet werden, wodurch zugleich ein wirksamer Korrosionsschutz an der Kontaktzone erreicht werden kann. Hinsichtlich des Werkstoffes der beiden Bleche sind in der DE-A 100 49 660 zwei unterschiedliche borlegierte Stähle angegeben.

Die DE 199 47 719 A1 offenbart ein Verfahren zur Herstellung von Fahrzeugkarosserien oder Karosseriebaugruppen, die bei hoher Festigkeit ein möglichst niedriges Gewicht aufweisen sollen. Das Verfahren ist im Wesentlichen dadurch gekennzeichnet, dass die Karosserie bzw. Karosseriebaugruppe aus Einzelkomponenten gebildet wird, die aus im Temperaturbereich zwischen 400 bis 900°C aushärtenden metallischen Werkstoffen bestehen, wobei die Einzelkomponenten durch eine Wärmebehandlung bei 400 bis 900°C mittels Löten gefügt werden. Hierzu werden die miteinander zu verbindenden Einzelkomponenten zunächst umgeformt und anschließend fixiert ("geheftet"). Das Fixieren erfolgt beispielsweise durch Punktschweißen. Die so gehefteten Komponenten werden dann durch Löten bei 400 bis 900°C gefügt, wobei mit dem Fügen gleichzeitig eine Matrixhärtung des Werkstoffes einhergeht In der DE 199 47 719 A1 wird darauf hingewiesen, dass Dualphasen-Stahl eine hohe Festigkeit bei guter Kaltumformbarkeit zeigt und einen Bake-hardening-Effekt aufweist. Bei Bake-hardening-Stählen wird eine hohe Bauteilfestigkeit dadurch erzielt, dass der Stahl neben der beim Pressen auftretenden Verformungsverfestigung noch eine nachfolgende Festigkeitssteigerung beim Einbrennlackieren erfährt. Eine Weiterentwicklung des Dualphasen-Stahl-Konzeptes ist der TRIP-Stahl, der ebenso wie der Dualphasen-Stahl ein mehrphasiges Gefüge mit weichen und harten Gefügebestandteilen besitzt.

Durch die DE 198 82 558 T1 ist ein Verfahren zur Herstellung eines gehärteten aus Blech bestehenden Produktes in einem Presshärtverfahren bekannt geworden, bei dem ein Rohling heißgepresst und das gepresste Produkt ausgehärtet wird, während es im Presswerkzeugpaar verbleibt. Hierbei werden Ränder von Löchern im Produkt abgebogen, wenn das Produkt in den Werkzeugen angeordnet ist.

In der DE 102 54 695 B3 wird ein Verfahren zur Herstellung eines metallischen Formbautelles, insbesondere eines Karosseriebauteils, aus einem Halbzeug aus einem ungehärteten, warmformbaren Stahlblech mit folgenden Verfahrensschritten beschrieben:
- aus dem Halbzeug wird durch ein Kaltumformverfahren, insbesondere durch ein Ziehverfahren, ein Bauteilrohling geformt,
- der Bauteilrohling wird randseitig auf eine dem herzustellenden Formbauteil näherungsweise entsprechende Randkontur beschnitten,
- der beschnittene Bauteilrohling wird erwärmt und in einem Warmumformwerkzeug fertiggeformt und zugleich pressgehärtet.

Im Zuge der Gewichtsreduzierung von Bauteilen, wie sie beispielsweise im Fahrzeugbau eingesetzt werden, ist eine ständige Forderung nach Erhöhung der Festigkeiten/Steifigkeiten der einzelnen Bauteile gegeben. Dies wird durch den bekannten Stand der Technik noch nicht in ausreichender Weise realisiert.

Aus dem Stand der Technik (z. B. DE 199 48 013 A1) ist es bekannt, ebene Stahlbleche unterschiedlicher Dicke und/oder aus unterschiedlichen Stahlwerkstoffen durch Laserschweißen miteinander zu verbinden, um so ein ebenes Blech-Halbzeug herzustellen, aus dem dann durch Umformen ein Formbauteil hergestellt wird. Halbzeuge dieser Art sind unter dem Stichwort Tailored Blanks bekannt geworden. Sie haben diesen Namen erhalten, weil die ebenen Bleche, aus denen die ebenen Blech-Halbzeuge gebildet werden, hinsichtlich ihrer Dicke und/oder Stahlgüten so ausgewählt werden, dass das fertig umgeformte Formbauteil genau auf seinen Einsatzfall angepasste maßgeschneiderte Eigenschaften aufweist.

Der Erfindung liegt die Aufgabe zugrunde, ein Verfahren zur Herstellung von aus Blechen vorgebbarer Werkstoffgüten gebildeten Bauteilen bereitzustellen, mit dem Formbauteile erzeugt werden können, die Bereiche unterschiedlicher Festigkeiten aufweisen. Dabei sind die Bereiche unterschiedlicher Festigkeiten der Bauteile so zu positionieren und auszuwählen, dass die Bauteile optimal an ihre in der jeweiligen Einbausituation zu übernehmenden Aufgaben angepaßt sind.

Diese Aufgabe wird erfindungsgemäß gelöst durch ein Verfahren zur Herstellung von Fahrzeugbauteilen, in dem mindestens ein Blech auf Basis eines boriegierten Vergütungs- oder Einsatzstahles mit mindestens einem Blech aus einem Dualphasen- oder TRIP-Stahl durch Schweißen und/oder Löten verbunden und dieser Materialverbund mindestens einem Umformvorgang unterworfen wird, wobei der Materialverbund warmumgeformt und lediglich das borlegierte Blech bei geschlossenen Formwerkzeughälften einer in situ Presshärtung unterzogen wird, und die Bleche vor dem Umformvorgang durch Laserschweißen, insbesondere Laserpunktschweißen, oder Löten miteinander verbunden werden.

Unter in situ Presshärtung versteht der Fachmann, dass das umgeformte Bauteil bei geschlossenen Formwerkzeughälften im Bereich eines der borlegierten Bleche in entsprechender Weise abgekühlt wird, Zumindest die damit in Wirkverbindung stehende Formwerkzeughälfte ist hierbei, insbesondere flüssigkeitsgekühlt, vorgesehen, so dass in Abhängigkeit der Abkühlgeschwindigkeit unterschiedliche Gefügestrukturen im fertigen Bauteil gezielt eingestellt werden können.

Vorteilhafte Weiterbildungen des erfindungsgemäßen Verfahrens sind den zugehörigen, verfahrensgemäßen Unteransprüchen zu entnehmen.

Die Aufgabe wird auch gelöst durch ein Karosseriebauteil in Form eines Materialverbundes für ein Fahrzeug, gebildet durch Warmpressformen eines aus mindestens zwei durch Schweißen und/oder Löten fest miteinander verbundenen Blechen, wobei mindestens ein Blech aus einem borlegierten Vergütungs- oder Einsatzstahl und mindestens ein weiteres Blech aus Dualphasen- oder TRIP-Stahl besteht und lediglich der aus dem borlegierten Vergütungs- oder Einsatzstahl gebildete Bauteilbereich durch in situ Presshärtung gehärtet ist.

Vorteilhafte Weiterbildungen des erfindungsgemäßen Karosseriebauteils sind den zugehörigen gegenständlichen Unteransprüchen zu entnehmen.

Zur Vermeidung von Verzunderung kommen vorteilhafterweise beschichtete Bleche zum Einsatz. Bedarfsweise können zwischen den Blechen zumindest bereichsweise Lötfolien eingebracht werden. Im Verlauf der Warmumformung schmilzt das Lot, wobei eine nahezu vollständig Kohäsion der Bauteile bei gleichzeitiger Verringerung von Korrosion und Verbesserung des Geräuschverhaltens herbeigeführt werden kann.

Ein borlegierter Vergütungs- bzw. Einsatzstahl wird vorteilhafter Weise schweißtechnisch, z.B. durch Laserschweißen, mit einem Dualphasen- oder einem TRIP-Stahl verbunden. So kann beispielsweise ein aus dem borlegierten Vergütungs- oder Einsatzstahl gebildetes Blech durch Punktschweißen, insbesondere Laser-Punktschweißen, mit dem aus einem Dualphasen- oder TRIP-Stahl bestehenden Blech verbunden werden.

Durch gezielte Auswahl und Anordnung von Blechen unterschiedlicher Werkstoffgüten, von denen das bzw. die borlegierten Bleche einer Presshärtung unterzogen wurden, können nun am fertigen Bauteil gezielte Festigkeits-/Steifigkeitseigenschaften eingestellt werden. Vorteilhafter Weise können nun auch Bleche geringerer Materialdicken eingesetzt werden, so dass gegenüber dem Stand der Technik ein reduziertes Bauteilgewicht herbeigeführt werden kann.

Der Erfindungsgegenstand ist vorteilhafter Weise im Karosseriebereich eines Fahrzeuges einsetzbar, wobei hier beispielsweise Tailored Blanks, die aus Blechzuschnitten unterschiedlicher Werkstoffgütern und Materialdicken gebildet sein können, den umzuformenden Materialverbund bilden. Diese geschweißten Platinen versetzen einen Konstrukteur in die Lage, spezielle Werkstoffeigenschaften und Blechdicken entsprechend der lokalen Bauteilbeanspruchungen so einzusetzen, dass sie zur Verbesserung des Struktur- und Crashverhaltens beitragen. Hier kann beispielsweise an Stellen mit hoher Belastung lokal Material mit deutlich höheren Festigkeiten und an den übrigen Stellen Material mit geringeren Festigkeiten eingesetzt werden. Verstärkungen entfallen in der Regel, so dass die Teilezahl verringert und das Gewicht reduziert werden kann.

Einem weiteren Gedanken der Erfindung gemäß kommen folgende Werkstoffe zum Einsatz:
- borlegierter Stahl 22MnB5, insbesondere mit (in Masse-%) C 0,22 %, Mn 1,2 %, Si 0,25 %, Cr 0,2 %, B 0,003 %,
- TRIP 700, insbesondere mit (in Masse-%) C 0,1 %, Mn 1,6 %, Si 1,6 %,
- DP 780, insbesondere mit (in Masse-%) C 0,15 %, Mn 1,9 %, Si 0,2 %, Cr 0,2 %.

Die Angaben beinhalten Mittelwerte, die auch innerhalb der den jeweiligen Werkstoff definierenden Analyse modifiziert werden können. Ein Dualphasenstahl ist ein Stahl mit ferritischer Matrix, in die Bainit- oder Martensit-Inseln eingelagert sind.

TRIP ist die Abkürzung für Transformation Induced Plasticity (Umwandlungsinduzierte Plastizität). Als Weiterentwicklung der Dualphasenstähle zählen die TRIP-Stähle zu den hochfesten kalt umformbaren Sorten. Hierbei handelt es sich um Stähle, deren Festigkeit erst während der Umformung vollständig erreicht wird. Das beruht auf dem im ferritisch bainitischen Gefüge vorliegenden metastabilen Restaustenit, das erst unter Einwirkung einer äußeren Spannung in Martensit umgewandelt wird. Dabei werden sowohl die Festigkeit (Streckgrenze und Zugfestigkeit) als auch die Duktilität des Stahls erhöht.

Untersuchungen haben gezeigt, dass der Werkstoff 22MnB5 zur Klasse der ultrahochfesten Stähle mit einer Festigkeit von 1200 Mpa und mehr zählt.

Die Kombination eines borlegierten Vergütungs- oder Einsatzstahles, vorzugsweise 22MnB5, in Verbindung mit einem Dualphasen- oder einem TRIP-Stahl, in Zusammenwirken mit der zumindest partiellen Presshärtung des borlegierten Vergütungs- oder Einsatzstahles ergibt die den Erfindungsgegenstand prägenden lokal hohem Bauteil- Festigkeitswerte, wobei zur Gewichtsreduzierung verhältnismäßig dünne Bleche (< 2 mm) eingesetzt werden können.

Das im Stand der Technik beschriebene Verfahren der Presshärtung (in situ) erfolgt dergestalt, dass beispielsweise ein Stahlblech in einem vorgebbaren Temperaturbereich (700 - 1000°C) erwärmt in eine, Formwerkzeughälften beinhaltende, Presse oder dergleichen Umformeinrichtung, eingebracht wird. Der Materialverbund wird unter der gewünschten Formänderung zwischen den Formwerkzeughälften gepresst. Die Formwerkzeughälften sind hierbei von innen gekühlt, so dass das Bauteil bei geschlossenen Formwerkzeughälften abgeschreckt und gehärtet werden kann. In Abhängigkeit von der Anfangstemperatur, der Formgebung sowie der Abkühlgeschwindigkeit können unterschiedliche Gefügestrukturen erzeugt werden.

Erfindungsgemäß soll hierbei lediglich das oder die borlegierte(n) Blech(e) einer in situ Presshärtung unterzogen werden.

Mit dem erfindungsgemäßen Verfahren können eine Vielzahl unterschiedlicher Bauteile erzeugt werden, die vorteilhafterweise im Fahrzeugbau eingesetzt werden können. Hier denkt der Fachmann sowohl an tragende als auch nicht tragende Bauteile, wie beispielsweise Türrahmen, Bodenteile, Längsträger und Säulen, wie insbesondere A- oder B-Säulen.

Der Erfindungsgegenstand ist anhand eines Ausführungsbeispieles in der Zeichnung dargestellt und wird wie folgt beschrieben. Es zeigen:
- Figur 1: Prinzipskizze von miteinander in Wirkverbindung stehenden Blechen unterschiedlicher Werkstoffgüten;
- Figur 2/2a: Prinzipskizze eines Umformvorganges zweier miteinander in Wirkverbindung stehender Bleche;
- Figur 3: Prinzipskizze hintereinander liegender Bleche unterschiedlicher Werkstoffgüte, die durch Schweißen miteinander verbunden, jedoch noch umzuformen sind;
- Figur 4: Prinzipskizze zweier übereinander liegender Bleche unterschiedlicher Werkstoffgüte, die noch umzuformen sind;
- Figur 5: Prinzipskizze eines noch nicht umgeformten Blech-Grundkörpers, der mit einem Blech anderer Werkstoffgüte durch Schweißen verbunden ist.

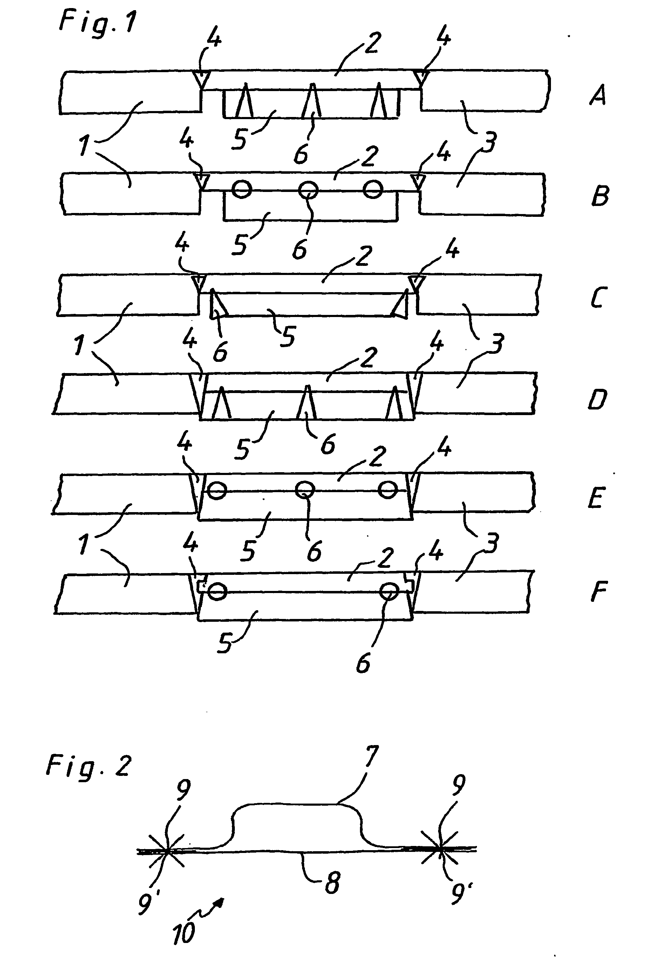

Figur 1 zeigt verschiedene Ausführungsbeispiele A bis F, wobei beschichtete Bleche 1,2,3 unterschiedlicher Werkstoffgüte und Dicke vorgesehen sind, die durch Schweißen miteinander verbunden wurden. Unterschiedliche Querschnittsformen von Schweißnähten 4 sind dargestellt, auf die an dieser Stelle jedoch nicht näher eingegangen wird. Die Schweißnähte 4 werden in diesem Beispiel durch Laserstrahlschweißen erzeugt. Das mittlere Blech 2 ist dünner ausgebildet als die äußeren Bleche 1,3. In der Vertiefung werden Blechstücke 5 eingebracht, die ebenfalls über unterschiedlichste Schweißkonturen 6 mit dem Blech 2, respektive den Blechen 1 und/oder 3, verbunden sind. Die Bleche 1,2,3 bestehen in diesem Beispiel aus einem borlegierten Vergütungsstahl. Das Einlageblech 5 hat in Abhängigkeit vom aufnehmenden Blech 2 eine andersartige Werkstoffgüte, und wird in diesem Beispiel durch einen Dualphasenstahl gebildet. Eine weitere Alternative könnte darin bestehen, die Bleche 1-3 als TRIP-Stahl auszubilden und das Einlagebiech 5 auf Basis eines borlegierten Vergütungs- oder Einsatzstahles vorzusehen. Der Fachmann wird in Abhängigkeit vom Anwendungsfall die geeignete Materialauswahl treffen. Je nach Ausgestaltung des späteren Bauteiles sind eine Reihe von Variationsmöglichkeiten gegeben, die vom allgemeinen Erfindungsgedanken mit umfasst sind.

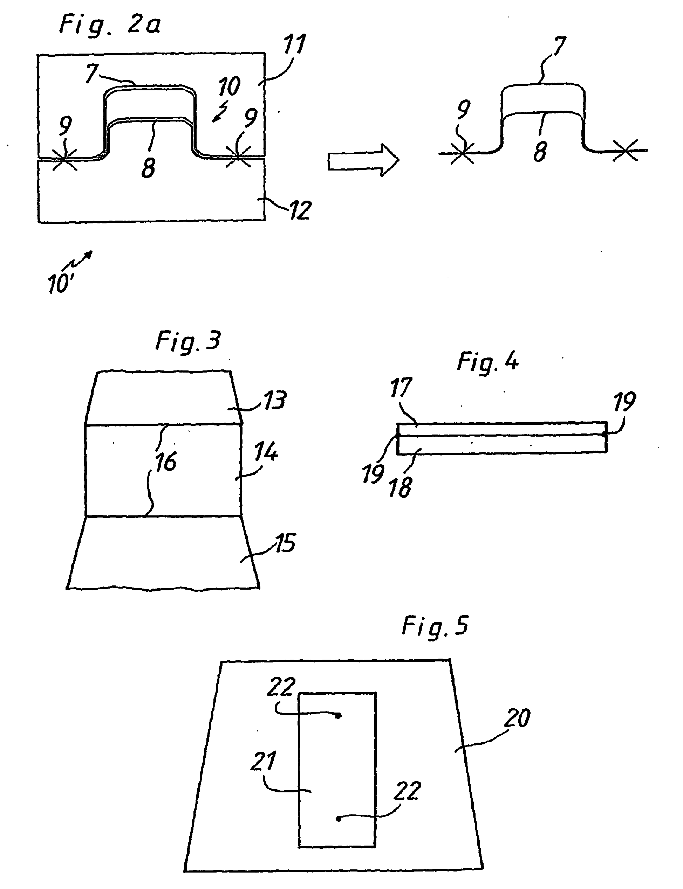

Figur 2/2a zeigt als Prinzipskizze den Ablauf eines möglichen Herstellverfahrens für ein Bauteil. Zum Einsatz gelangt ein vorgeformtes beschichtetes Blech 7, das mit einem ebenfalls beschichteten ebenen Blech 8 über Schweißnähte 9 verbunden ist. In diesem Beispiel soll das vorgeformte Blech 7 aus dem Werkstoff DP 780 mit einer Blechstärke von 1,76 mm bestehen. Das plane Blech 8 wird gebildet aus dem Werkstoff 22MnB5 mit einer Blechdicke von 1 mm. Zwischen den Blechen 7,8 ist partiell eine Lötfolie 9' vorgesehen. Dieser Materialverbund 10 wird nun auf eine Temperatur zwischen 800 und 900°C erwärmt. Vorteilhafter Weise wird hierbei die jeweilige Austenitisierungstemperatur (abhängig von der jeweiligen Werkstoffgüte) eingestellt. Zwischen zwei Formwerkzeughälften 11,12 einer nur angedeuteten Presse 10' wird der erwärmte Materialverbund 10 eingebracht und durch Umformung in die dargestellte Form gebracht. Im Anschluss an die Umformung wird der Materialverbund 10 unter Verbleiben in der Presse 10', respektive den Formwerkzeughälften 11,12, einer Presshärtung durch Schnellkühlung unterzogen. Im rechten Bild der Fig. 2a ist das fertig ausgehärtete Werkstück, in diesem Beispiel eine B-Säule für eine Fahrzeugkarosserie, dargestellt, die hervorragende mechanische Eigenschaften aufweist. Im Anschluss an die Aushärtung weist der Werkstoff 22MnB5 eine vollständig martensitische Struktur auf. Der Werkstoff DP 780 beinhaltet eine Martensit + Bainit-Struktur, während bei Verwendung des Werkstoffes TRIP 700 anstelle von DP 780 selbiger Ferrite und Bainitkörner mit Ausfällungen in den Grenzschichten aufweisen würde.

Zur Einstellung der hervorragenden Festigkeitswerte des borlegierten Vergütungs- oder Einsatzstahles ist es ausreichend, lediglich diejenigen Bereiche der Formwerkzeughälfte 12 zu kühlen, die mit dem zugehörigen borlegierten Blech 8 in Wirkverbindung steht, so dass eine in situ Presshärtung des umgeformten Bleches 8 erfolgt.

Die Figuren 3 bis 5 zeigen weitere mögliche Anwendungsgebiete als Prinzipskizze:
Figur 3 zeigt in der Draufsicht drei nebeneinander liegende Bleche 13,14,15 unterschiedlichster Formen, wobei die Bleche 13 und 15 in diesem Beispiel aus TRIP 700 und das Blech 14 aus 22MnB5 bestehen sollen. Die lasergeschweißten Nähte 16 erstrecken sich jeweils über die Breite der Bleche 13 bis 15.
Figur 4 zeigt in der Seitenansicht zwei übereinander liegende Bleche 17,18, die in ihren Randbereichen mit Lötnähten 19 versehen sind. Das Blech 17 soll hierbei aus DP 780 und das Blech 18 aus 22MnB5 bestehen.
Figur 5 zeigt eine weitere Variante eines ebenen Materialverbundes vor der Umformung, nämlich ein einen Grundkörper bildendes Blech 20, beispielsweise aus TRIP 700, auf welches zur lokalen Verstärkung eine Blechauflage 21 aus 22MnB5 aufgebracht ist. Über Punktschweißungen 22 ist das Blech 21 mit dem Grundkörper 22 verbunden. Derartige Halbzeuge sind in der Fachwelt auch als Patchwork-Blanks bekannt.

### Bezugszeichenliste

- 1: dickeres Blech
- 2: dünneres Blech
- 3: dickeres Blech
- 4: Schweißnaht
- 5: Einlageblech
- 6: Schweißkontur
- 7: vorgeformtes Blech
- 8: planes Blech
- 9: Schweißnaht
- 9': Lötfolie
- 10: Materialverbund
- 10': Presse
- 11: Formwerkzeughälfte
- 12: Formwerkzeughälfte
- 13: Blech
- 14: Blech
- 15: Blech
- 16: Schweißnaht
- 17: Blech
- 18: Blech
- 19: Lötnaht
- 20: Blech
- 21: Blechauflage
- 22: Punktschweißung

## Patentansprüche

1. Verfahren zur Herstellung von Fahrzeugbauteilen, in dem mindestens ein Blech (1, 2, 3, 8, 14, 18, 21) auf Basis eines borlegierten Vergütungs- oder Einsatzstahles mit mindestens einem Blech (5, 7,13,15,17, 20) aus einem Dualphasen- oder TRIP-Stahl durch Schweißen und/oder Löten verbunden und dieser Materialverbund (10) mindestens einem Umformvorgang unterworfen wird, wobei der Materialverbund warmumgeformt und lediglich das borlegierte Blech bei geschlossenen Formwerkzeughälften (11, 12) einer in situ Presshärtung unterzogen wird, und die Bleche vor dem Umformvorgang durch Laserschweißen, insbesondere Laserpunktschweißen, oder Löten miteinander verbunden werden.

2. Verfahren nach Anspruch 1, **dadurch gekennzeichnet, dass** zur Erzeugung des Materialverbundes (10) mehrere Bleche (1, 2, 3, 7, 8, 13, 14, 15, 17, 18, 20, 21) unterschiedlicher Dicke hinter- oder nebeneinander gelegt sowie durch Schweißen und/oder Löten miteinander verbunden werden.

3. Verfahren nach Anspruch 1 oder 2, **dadurch gekennzeichnet, dass** im Bereich eines mit mindestens einer Vertiefung oder geringerer Materialdicke vorgesehenen Bleches (2, 17) mindestens ein weiteres Blech (5, 18) auf- bzw. eingelegt und durch Schweißen oder Löten mit dem Blech (2, 17) verbunden wird.

4. Verfahren nach einem der Ansprüche 1 bis 3, **dadurch gekennzeichnet, dass** als borlegierter Stahl der Werkstoff 22MnB5, insbesondere mit (in Masse-%) C 0,22%, Mn 1,2%, Si 0,25%, Cr 0,2%, B 0,003%, eingesetzt wird.

5. Verfahren nach einem der Ansprüche 1 bis 4, **dadurch gekennzeichnet, dass** als Dualphasen-Stahl der Werkstoff DP 780, insbesondere mit (in Masse-%) C 0,15%, Mn 1,9%, Si 0,2%, Cr 0,2%, eingesetzt wird.

6. Verfahren nach einem der Ansprüche 1 bis 4, **dadurch gekennzeichnet, dass** als TRIP-Stahl der Werkstoff TRIP 700, insbesondere mit (in Masse-%) C 0,1%, Mn 1,6%, Si 1,6%, eingesetzt wird.

7. Verfahren nach einem der Ansprüche 1 bis 6, **dadurch gekennzeichnet, dass** zumindest Teile der Bleche (1, 2, 3, 5, 7, 8, 13, 14, 15, 17, 18, 20, 21) zur Vermeidung von Verzunderungen vor der Warmumformung mit einer Beschichtung versehen werden.

8. Verfahren nach einem der Ansprüche 1 bis 7, **dadurch gekennzeichnet, dass** eine metallische Beschichtung, insbesondere auf Al-Basis, auf der Blechoberfläche aufgebracht wird.

9. Verfahren nach einem der Ansprüche 1 bis 8, **dadurch gekennzeichnet, dass** zumindest bereichsweise zwischen den Blechen (1, 2,3, 5,7, 8, 13, 14, 15, 17, 18, 20, 21) Lötfolien (9') eingebracht werden.

10. Verfahren nach einem der Ansprüche 1 bis 9, **dadurch gekennzeichnet, dass** der Materialverbund (10) zu Kraftfahrzeug-Karosseriebauteilen umgeformt wird.

11. Verfahren nach einem der Ansprüche 1 bis 10, **dadurch gekennzeichnet, dass** der Materialverbund (10) zu tragenden Kraftfahrzeug-Karosseriebauteilen umgeformt wird.

12. Verfahren nach einem der Ansprüche 1 bis 11, **dadurch gekennzeichnet, dass** der Materialverbund (10) zu Kraftfahrzeug-A- oder B-Säulen umgeformt wird.

13. Karosseriebauteil in Form eines Materialverbundes (10) für ein Fahrzeug, gebildet durch Warmpressformen eines Materialverbundes aus mindestens zwei durch Schweißen und/oder Löten fest miteinander verbundenen Blechen, wobei mindestens ein Blech (1, 2, 3, 8, 14, 18, 21) aus einem borlegierten Vergütungs- oder Einsatzstahl und mindestens ein weiteres Blech (5, 7, 13, 15, 17, 20) aus Dualphasen- oder TRIP-Stahl besteht und lediglich der aus dem borlegierten Vergütungs- oder Einsatzstahl gebildete Bauteilbereich bei geschlossenen Formwerkzeughälften (11, 12) durch in situ Presshärtung gehärtet ist.

14. Karosseriebauteil nach Anspruch 13, **dadurch gekennzeichnet, dass** der Materialverbund (10) durch Tailored Blanks gebildet ist.

15. Karosseriebauteil nach Anspruch 13 oder 14, **dadurch gekennzeichnet, dass** der Materialverbund (10) durch ein tragendes Kraftfahrzeug-Bauteil, insbesondere als A- oder B-Säule, gebildet ist.

16. Karosseriebauteil nach einem der Ansprüche 13 bis 15, **dadurch gekennzeichnet, dass** das mindestens eine aus borlegiertem Vergütungs- oder Einsatzstahl gebildete Blech (1, 2, 3, 8, 14, 18, 21) aus dem Werkstoff 22MnB5 besteht.

17. Karosseriebauteil nach einem der Ansprüche 13 bis 16, **dadurch gekennzeichnet, dass** das mindestens eine aus einem Dualphasen-Stahl gebildete Blech (7, 17) aus dem Werkstoff DP 780 besteht.

18. Karosseriebauteil nach einem der Ansprüche 13 bis 16, **dadurch gekennzeichnet, dass** das mindestens eine aus einem TRIP-Stahl gebildete Blech (13, 15, 20) aus dem Werkstoff TRIP 700 besteht.

19. Karosseriebauteil nach einem der Ansprüche 13 bis 18, **dadurch gekennzeichnet, dass** die Bleche (1-3, 5,7, 8,13-15,17,18, 20, 21) durch Schweißen oder Löten zumindest partiell miteinander verbunden sind.

20. Karosseriebauteil nach einem der Ansprüche 13 bis 19, **dadurch gekennzeichnet, dass** zwischen einzelnen Blechen (1-3, 7, 8, 13-15, 17, 18, 20, 21) zumindest bereichsweise Lötfolien (9') vorgesehen sind.

21. Karosseriebauteil nach einem der Ansprüche 13 bis 20, **dadurch gekennzeichnet, dass** zumindest das borlegierte Blech (1, 2, 3, 8, 14, 18, 21) mit einer metallischen Beschichtung, insbesondere auf Basis von Aluminium, versehen ist.

## Claims

1. Method for producing vehicle components, in which at least one sheet (1, 2, 3, 8, 14, 18, 21) based on a boron-alloyed heat-treatable steel or case-hardening steel is bonded to at least one sheet (5, 7, 13, 15, 17, 20) of dual-phase steel or TRIP steel by welding and/or soldering, and this material composite (10) is subjected to at least one forming process, the material composite being hot formed and only the boron-alloyed sheet being subjected to an in situ press quenching with closed moulding tool halves (11, 12) and the sheets being bonded to one another by laser welding, in particular laser spot welding, or soldering.

2. Method according to claim 1, **characterised in that** to produce the material composite (10), a plurality of sheets (1, 2, 3, 7, 8, 13, 14, 15, 17, 18, 20, 21) of differing thicknesses are placed in tandem or side by side and bonded to one another by welding and/or soldering.

3. Method according to either claim 1 or claim 2, **characterised in that** in the region of a sheet (2, 17) having at least one indentation or low material thickness, at least one further sheet (5, 18) is applied or inserted and is bonded to the sheet (2, 17) by welding or soldering.

4. Method according to any one of claims 1 to 3, **characterised in that** the material 22MnB5, in particular with (in mass %) C 0.22%, Mn 1.2%, Si 0.25%, Cr 0.2%, B 0.003%, is used as the boron-alloyed steel.

5. Method according to any one of claims 1 to 4, **characterised in that** the material DP 780, in particular with (in mass %) C 0.15%, Mn 1.9%, Si 0.2%, Cr 0.2%, is used as the dual-phase steel.

6. Method according to any one of claims 1 to 4, **characterised in that** the material TRIP 700, in particular with (in mass %) C 0.1%, Mn 1.6%, Si 1.6%, is used as the TRIP steel.

7. Method according to any one of claims 1 to 6, **characterised in that** at least parts of the sheets (1, 2, 3, 5, 7, 8, 13, 14, 15, 17, 18, 20, 21) are provided with a coating before the hot forming to avoid scaling.

8. Method according to any one of claims 1 to 7, **characterised in that** a metal coating, in particular based on Al, is applied to the surface of the sheet.

9. Method according to any one of claims 1 to 8, **characterised in that** soldering foils (9') are placed between the sheets (1, 2, 3, 5, 7, 8, 13, 14, 15, 17, 18, 20, 21) in at least some regions.

10. Method according to any one of claims 1 to 9, **characterised in that** the material composite (10) is formed into motor vehicle bodywork components.

11. Method according to any one claims 1 to 10, **characterised in that** the material composite (10) is formed into load-bearing motor vehicle bodywork components.

12. Method according to any one of claims 1 to 11, **characterised in that** the material composite (10) is formed into motor vehicle A or B pillars.

13. Bodywork component in the form of a material composite (10) for a vehicle, formed by hot-press forming a material composite comprising at least two sheets bonded firmly to one another by welding and/or soldering, at least one sheet (1, 2, 3, 8, 14, 18, 21) consisting of a boron-alloyed heat-treatable steel or case-hardening steel and at least one sheet (5, 7, 13, 15, 17, 20) consisting of dual-phase steel or TRIP steel, and only the component region formed from the boron-alloyed heat-treatable steel or case-hardening steel being hardened by in situ press quenching with closed moulding tool halves (11, 12).

14. Bodywork component according to claim 13, **characterised in that** the material composite (10) is formed using tailored blanks.

15. Bodywork component according to either claim 13 or claim 14, **characterised in that** the material composite (10) is formed by a load-bearing motor vehicle component, in particular as A or B pillar.

16. Bodywork component according to any one of claims 13 to 15, **characterised in that** the at least one sheet (1, 2, 3, 8, 14, 18, 21) formed from a boron-alloyed heat-treatable steel or case-hardening steel consists of the material 22MnB5.

17. Bodywork component according to any one of claims 13 to 16, **characterised in that** the at least one sheet (7, 17) formed from dual-phase steel consists of the material DP 780.

18. Bodywork component according to any one of claims 13 to 16, **characterised in that** the at least one sheet (13, 15, 20) formed from TRIP steel consists of the material TRIP 700.

19. Bodywork component according to any one of claims 13 to 18, **characterised in that** the sheets (1-3, 5, 7, 8, 13-15, 17, 18, 20, 21) are at least partially bonded to one another by welding or soldering.

20. Bodywork component according to any one of claims 13 to 19, **characterised in that** soldering foils (9') are provided between individual sheets (1-3, 7, 8, 13-15, 17, 18, 20, 21) in at least some regions.

21. Bodywork component according to any one of claims 13 to 20, **characterised in that** at least the boron-alloyed sheet (1, 2, 3, 8, 14, 18, 21) is provided with a metal coating, in particular based on aluminium.

## Revendications

1. Procédé de fabrication de pièces de véhicules, dans lequel au moins une tôle (1, 2, 3, 8, 14, 18, 21), à base d'un acier de traitement ou de cémentation allié avec du bore, est assemblée, par soudage et / ou par brasage, avec au moins une tôle (5, 7, 13, 15, 17, 20) composée d'un acier à deux phases ou d'un acier TRIP, et cet assemblage de matériaux (10) est soumis au moins à un processus de formage, l'assemblage de matériaux étant déformé à chaud, et seulement la tôle alliée avec du bore est soumise, les moitiés d'outils de formage (11, 12) étant fermées, à un durcissement par compression effectué in situ, et les tôles, avant le processus de formage, sont assemblées l'une à l'autre par soudage laser, en particulier par soudage laser par points, ou bien par brasage.

2. Procédé selon la revendication 1, **caractérisé en ce que**, pour produire l'assemblage de matériaux (10), plusieurs tôles (1, 2, 3, 7, 8, 13, 14, 15, 17, 18, 20, 21) de différentes épaisseurs sont placées les unes derrière les autres ou les unes à côté des autres, et assemblées les unes aux autres par soudage et / ou par brasage.

3. Procédé selon la revendication 1 ou 2, **caractérisé en ce qu'**au moins une autre tôle (5, 18) est posée ou introduite dans la zone d'une tôle (2, 17) prévue en ayant au moins une empreinte ou une épaisseur de matériau plus réduite, et assemblée avec la tôle (2, 17), par soudage ou par brasage.

4. Procédé selon l'une quelconque des revendications 1 à 3, **caractérisé en ce que** l'on utilise, comme acier allié avec du bore, le matériau 22MnB5, en particulier comprenant (% en poids) 0,22 % de carbone (C), 1,2 % de manganèse (Mn), 0,25 % de silicium (Si), 0,2 % de chrome (Cr), 0,003 % de bore (B).

5. Procédé selon l'une quelconque des revendications 1 à 4, **caractérisé en ce que** l'on utilise comme acier à deux phases, le matériau DP 780, en particulier comprenant (% en poids) 0,15 % de carbone (C), 1,9 % de manganèse (Mn), 0,2 % de silicium (Si), 0,2 % de chrome (Cr).

6. Procédé selon l'une quelconque des revendications 1 à 4, **caractérisé en ce que** l'on utilise, comme acier TRIP, le matériau TRIP 700, en particulier comprenant (% en poids) 0,1 % de carbone (C), 1,6 % de manganèse (Mn), 1,6 % de silicium (Si).

7. Procédé selon l'une quelconque des revendications 1 à 6, **caractérisé en ce qu'**au moins des parties des tôles (1, 2, 3, 5, 7, 8, 13, 14, 15, 17, 18, 20, 21) sont, avant la déformation à chaud, dotées d'un revêtement pour éviter des phénomènes d'oxydation.

8. Procédé selon l'une quelconque des revendications 1 à 7, **caractérisé en ce qu'**un revêtement métallique, en particulier à base d'aluminium, est appliqué sur la surface de la tôle.

9. Procédé selon l'une quelconque des revendications 1 à 8, **caractérisé en ce que** des feuilles de brasage (9') sont introduites, au moins par zones, entre les tôles (1, 2, 3, 5, 7, 8, 13, 14, 15, 17, 18, 20, 21).

10. Procédé selon l'une quelconque des revendications 1 à 9, **caractérisé en ce que** l'assemblage de matériaux (10) est façonné pour former des pièces de carrosseries de véhicules automobiles.

11. Procédé selon l'une quelconque des revendications 1 à 10, **caractérisé en ce que** l'assemblage de matériaux (10) est façonné pour former des pièces porteuses de carrosseries de véhicules automobiles.

12. Procédé selon l'une quelconque des revendications 1 à 11, **caractérisé en ce que** l'assemblage de matériaux (10) est façonné pour former des montants A ou B de véhicules automobiles.

13. Pièce de carrosserie se présentant sous la forme d'un assemblage de matériaux (10) pour un véhicule, formée par pressurage à chaud dudit assemblage se composant d'au moins deux tôles solidement assemblées l'une à l'autre par soudage et / ou par brasage, où au moins une tôle (1, 2, 3, 8, 14, 18, 21) se compose d'un acier de traitement ou de cémentation allié avec du bore et au moins une autre tôle (5, 7, 13, 15, 17, 20) se compose d'un acier à deux phases ou d'un acier TRIP, et seulement la zone de la pièce formée par l'acier de traitement ou de cémentation allié avec du bore est durcie par un durcissement par compression effectué in situ, les moitiés d'outils de formage (11, 12) étant fermées.

14. Pièce de carrosserie selon la revendication 13, **caractérisée en ce que** l'assemblage de matériaux (10) est formé par des flans spécialement adaptés à la demande.

15. Pièce de carrosserie selon la revendication 13 ou 14, **caractérisée en ce que** l'assemblage de matériaux (10) est formé par une pièce porteuse d'un véhicule automobile, en particulier comme un montant A ou B.

16. Pièce de carrosserie selon l'une quelconque des revendications 13 à 15, **caractérisée en ce que** la tôle au moins au nombre de un (1, 2, 3, 8, 14, 18, 21) formée par un acier de traitement ou de cémentation allié avec du bore se compose du matériau 22MnB5.

17. Pièce de carrosserie selon l'une quelconque des revendications 13 à 16, **caractérisée en ce que** la tôle au moins au nombre de un (7, 17) formée par un acier à deux phases se compose du matériau DP 780.

18. Pièce de carrosserie selon l'une quelconque des revendications 13 à 16, **caractérisée en ce que** la tôle au moins au nombre de un (13, 15, 20) formée par un acier TRIP se compose du matériau TRIP 700.

19. Pièce de carrosserie selon l'une quelconque des revendications 13 à 18, **caractérisée en ce que** les tôles (1-3, 5, 7, 8, 13-15, 17, 18, 20, 21) sont assemblées les unes aux autres, au moins partiellement, par soudage ou par brasage.

20. Pièce de carrosserie selon l'une quelconque des revendications 13 à 19, **caractérisée en ce qu'**il est prévu, entre les différentes tôles (1-3, 7, 8, 13-15, 17, 18, 20, 21), des feuilles de brasage (9') disposées au moins par zones.

21. Pièce de carrosserie selon l'une quelconque des revendications 13 à 20, **caractérisée en ce qu'**au moins la tôle alliée avec du bore (1, 2, 3, 8, 14, 18, 21) est dotée d'un revêtement métallique, en particulier à base d'aluminium.
